# DEMANDE DE BREVET EUROPEEN

(11) **EP 0 604 253 A1**
(43) Date de publication de la demande: **29.06.1994**
(21) Numéro de dépôt: 93402903.4
(22) Date de dépôt: 30.11.1993
(51) Int. Cl.: B60B 7/08

(54) **Enjoliveur pour roue de véhicule**

(30) Priorité: 21.12.1992 FR 9215412
(71) Demandeur: AUTOMOBILES PEUGEOT, F-75116 Paris (FR); AUTOMOBILES CITROEN, F-92200 Neuilly sur Seine (FR)
(72) Inventeur: Rouxel, Pascal, Résidence "La Fresnaie", F-34260 Fresnes (FR)
(74) Mandataire: Durand, Yves Armand Louis

(57) **Abrégé**

La présente invention concerne un enjoliveur pour roue de véhicule.

Cet enjoliveur comprend essentiellement un disque décoratif (1) dont la face interne (1a) porte une pluralité de pattes (2) à chacune desquelles est associé un aimant (3) qui, en position montée de l'enjoliveur, s'applique sur la face intérieure de la jante pour contribuer à la retenue de l'enjoliveur sur la jante qui peut comporter une gorge (5) permettant le verrouillage d'un bourrelet (4) éventuellement prévu en bout de chaque patte (2).

L'enjoliveur de cette invention peut être monté sur un véhicule quelconque de tourisme ou même utilitaire.

## Description

La présente invention a essentiellement pour objet un enjoliveur apte à être monté sur les roues en acier d'un véhicule automobile par exemple.

On connaît déjà des enjoliveurs de roue se composant d'une manière générale d'un disque décoratif dont l'une des faces peut comporter plusieurs pattes susceptibles de s'accrocher sur la jante de roue,

Les pattes sont généralement maintenues en contrainte par un anneau métallique faisant office de ressort, c'est-à-dire poussant radialement et vers l'extérieur les pattes pour permettre leur clippage sur la jante de roue sous l'effet d'une pression exercée sur l'enjoliveur. Ainsi, après montage, les pattes sont comprimées entre la jante et l'anneau métallique formant ressort.

Toutefois, une telle structure d'enjoliveur présente un certain nombre d'inconvénients résultant du montage et du démontage de l'enjoliveur et parmi lesquels il faut citer l'usure de la peinture de roue, l'usure des pattes elles-mêmes, et même parfois la rupture de ces pattes, si elles ont été trop écartées par l'anneau métallique avant montage.

Aussi, la présente invention a pour but de remédier notamment aux inconvénients ci-dessus en proposant un enjoliveur perfectionné et de structure simple, qui n'est soumis à aucune contrainte lors du stockage, mais qui est mis en contrainte seulement lorsqu'il est monté sur la jante de roue, de sorte que les phénomènes d'usure de la peinture et d'usure ou de rupture des pattes sont avantageusement supprimés.

A cet effet, l'invention a pour objet un enjoliveur pour roue en acier de véhicule automobile en particulier et du type comprenant un disque dont l'une des faces comporte plusieurs pattes pouvant s'accrocher sur la jante de roue, caractérisé en ce que chaque patte est munie d'au moins un aimant qui, en position montée de l'enjoliveur, s'applique sur la face intérieure de la jante pour contribuer à la retenue de l'enjoliveur sur ladite jante.

Suivant une autre caractéristique de cet enjoliveur, chaque patte comporte à son extrémité libre un bourrelet ou analogue qui est susceptible de coopérer avec une gorge dans la face intérieure de la jante et auquel est associé ledit aimant.

Suivant un mode de réalisation de l'invention, l'aimant est adjacent au bourrelet et s'étend radialement et extérieurement à la patte suivant une hauteur inférieure à celle du bourrelet.

Suivant un autre mode de réalisation, l'aimant est noyé dans le bourrelet de façon à présenter une partie susceptible de s'appliquer sur le fond de la gorge précitée.

Selon encore un autre mode de réalisation, l'aimant précité est noyé dans le bourrelet de façon à présenter une partie constituant un embout de la patte, lequel embout est susceptible de s'appliquer sur le fond de la face intérieure de la jante.

Suivant encore une autre caractéristique de cet enjoliveur, l'aimant précité est monté à l'extrémité libre de chaque patte ou au voisinage de cette extrémité libre, ceci signifiant que chaque patte peut ne pas comporter un bourrelet à son extrémité libre.

Mais d'autres caractéristiques et avantages de l'invention apparaîtront mieux dans la description détaillée qui suit et se réfère aux dessins annexés, donnés uniquement à titre d'exemple et dans lesquels :
La figure 1 est une vue en coupe axiale d'un enjoliveur selon l'invention en position montée sur une jante de roue en acier ;
La figure 2 est une vue partielle encore en coupe axiale d'un autre mode de réalisation de cet enjoliveur ;
La figure 3 est une vue partielle et en coupe axiale d'encore un autre mode de réalisation de cet enjoliveur.
Les figures 4 à 6 illustrent successivement les diverses phases de montage de l'enjoliveur représenté sur la figure 1.

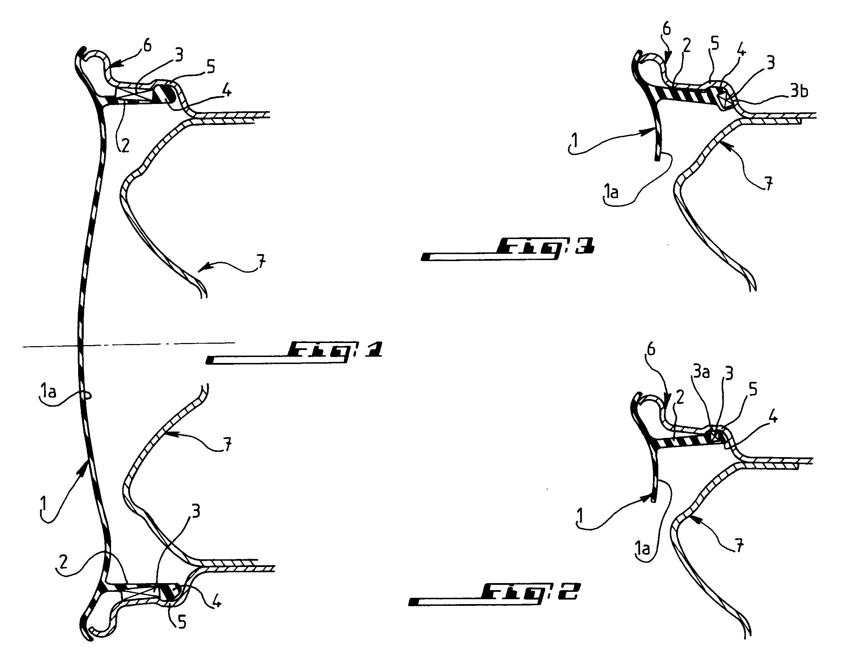

Un enjoliveur conforme aux principes de cette invention, et comme on le voit bien sur les figures 1 à 3, comprend essentiellement un disque décoratif 1 dont la face intérieure la porte une pluralité de pattes 2 à chacune desquelles est associé, par tout moyen approprié tel que collage ou surmoulage, un aimant 3.

Chaque patte 2 comporte, à son extrémité libre, un bourrelet ou analogue 4 susceptible de s'accrocher dans une gorge 5 pratiquée dans la jante 6 d'une roue 7 en acier appartenant par exemple à un véhicule automobile.

L'aimant 3 solidaire de chaque patte 2 peut être associé au bourrelet 4 à l'extrémité de chaque patte de différentes manières, comme on le décrira ci-après.

Suivant le mode de réalisation illustré par la figure 1, l'aimant est adjacent au bourrelet 4 et s'étend radialement et vers l'extérieur de la patte 2 suivant une hauteur qui est inférieure à celle du bourrelet 4.

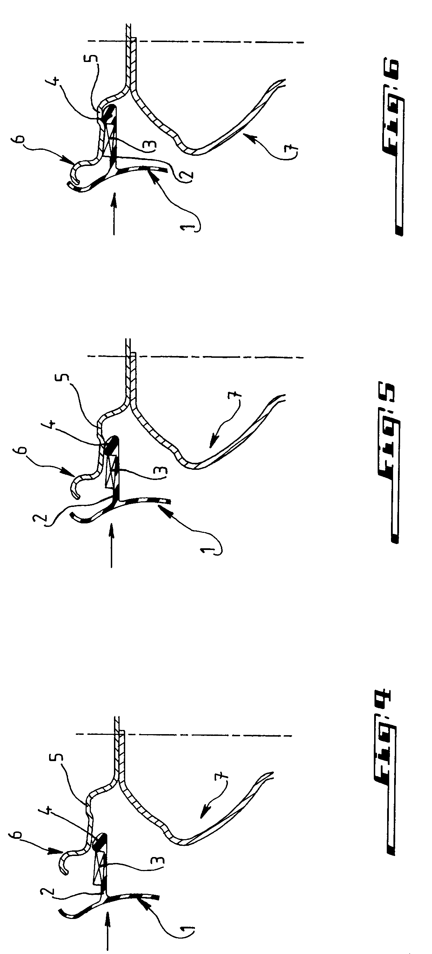

Dans le mode de réalisation de la figure 2, l'aimant 3 est en quelque sorte noyé dans le bourrelet 4 de chaque patte 2 de manière à présenter une partie ou une face 3a susceptible de s'appliquer sur le fond de la gorge 5 dans la jante de roue 6.

Suivant le mode de réalisation représenté sur la figure 3, l'aimant 3 est encore noyé dans le bourrelet 4 de chaque patte 2 de façon à présenter une partie ou une face 3b qui forme ici en quelque sorte un embout de la patte 2, lequel embout est susceptible de s'appliquer non pas dans le fond de la gorge 5, mais sur le fond axial de la face intérieure de la jante de roue 6.

Le montage et le fonctionnement de l'enjoliveur représenté sur la figure 1 seront maintenant brièvement expliqués en se reportant plus particulièrement aux figures 4 à 6.

Lors de l'entrée de l'enjoliveur dans la jante de roue 6, seuls les bourrelets 4 de chaque patte 2 seront en contact avec la face interne de ladite jante. Les pattes 2 sont simplement guidées par la forme de la jante 6 qui est légèrement conique à cet endroit, comme on le voit bien sur la figure 4.

Au fur et à mesure de la progression de l'enjoliveur vers la roue 7, et comme on le voit bien sur la figure 5, l'effort exercé par l'aimant 3 et entraînant la patte 2 vers l'extérieur en position appliquée contre la face interne de la jante 6, augmentera.

Et cela jusqu'à ce que le bourrelet 4 de chaque patte 2 vienne se verrouiller dans la gorge 5 de la jante 6, comme on le voit bien sur la figure 6.

Dans cette position, c'est-à-dire seulement lorsque le bourrelet 4 sera clippé dans la gorge 5 de la jante 6, l'aimant 3 s'appliquera alors sur la face interne de ladite jante pour finalement lier l'enjoliveur à la roue 7.

Les trois étapes représentées respectivement sur les figures 4, 5 et 6 ne nécessitent que très peu d'efforts de la part de l'utilisateur qui ne percevra finalement que le verrouillage de l'enjoliveur en fin de translation. Le démontage de l'enjoliveur s'effectuera par traction sur celui-ci pour provoquer le "décollement" de l'aimant de chaque patte sous l'effet de la réaction entre le bourrelet 4 et la gorge 5.

Dans le mode de réalisation de la figure 2, l'aimant 3 est relativement faible pour ne pas freiner excessivement son glissement sur la jante lors du montage. Ici, l'accrochage est réalisé de façon simultanée magnétiquement par l'aimant 3 et mécaniquement par le bourrelet 4.

Dans le mode de réalisation de la figure 3, l'accrochage s'effectue d'une part mécaniquement par le bourrelet 4 coopérant avec la gorge 5, mais aussi magnétiquement par l'aimant 3 s'appliquant sur le fond axial de la face interne de la jante 6. Il est à noter qu'ici, en particulier, le bourrelet 4 peut être omis, de sorte que l'accrochage peut n'être que magnétique, les pattes 2 n'assurant que le centrage de l'enjoliveur dans la jante 6.

A cet égard, on peut remarquer que, d'une manière générale, le bourrelet 4 à l'extrémité de chaque patte 2 pourrait être omis, de sorte que l'extrémité libre de chaque patte comporterait tout simplement un aimant susceptible de présenter une force magnétique quelconque et appropriée pour retenir, et cela de façon amovible, l'enjoliveur sur la roue 7.

On a donc réalisé suivant l'invention un enjoliveur de roue à fixation magnétique qui, au stockage, ne présente aucune contrainte, qui est contraint seulement lorsqu'il est monté sur la jante de roue, qui peut s'adapter facilement aux différentes cotes de cette jante et qui supprime tous les problèmes d'usure et même de rupture des pattes et aussi d'usure de la peinture des roues.

L'invention n'est nullement limitée aux modes de réalisation décrits et illustrés qui n'ont été donnés qu'à titre d'exemple.

C'est ainsi que la position de l'aimant associé à chaque patte peut être quelconque, de même que la répartition, la forme et le nombre des pattes sur l'enjoliveur peuvent aussi être quelconques en fonction du style et des impératifs techniques.

L'invention comprend donc tous les équivalents techniques des moyens décrits ainsi que leurs combinaisons, si celles-ci sont effectuées suivant son esprit.

## Revendications

1. Enjoliveur pour roue en acier de véhicule automobile en particulier et du type comprenant un disque (1) dont l'une (1a) des faces comporte plusieurs pattes (2) pouvant s'accrocher sur la jante (6) de roue (7), caractérisé en ce que chaque patte (2) est munie d'au moins un aimant (3) qui, en position montée de l'enjoliveur, s'applique sur la face intérieure de la jante (6) pour contribuer à la retenue de l'enjoliveur sur ladite jante.

2. Enjoliveur selon la revendication 1, caractérisé en ce que chaque patte (2) comporte à son extrémité libre un bourrelet ou analogue (4) qui est susceptible de coopérer avec une gorge (5) dans la face intérieure de la jante (6) et auquel est associé ledit aimant (3).

3. Enjoliveur selon la revendication 1 ou 2, caractérisé en ce que l'aimant (3) est adjacent au bourrelet (4) et s'étend radialement et extérieurement à la patte (2) suivant une hauteur inférieure à celle du bourrelet (4).

4. Enjoliveur selon la revendication 1 ou 2, caractérisé en ce que l'aimant (3) est noyé dans le bourrelet (4) de façon à présenter une partie (3a) susceptible de s'appliquer sur le fond de la gorge précitée (5).

5. Enjoliveur selon la revendication 1 ou 2, caractérisé en ce que l'aimant précité (3) est noyé dans le bourrelet (4) de façon à présenter une partie (3b) constituant un embout de la patte (2), lequel embout est susceptible de s'appliquer sur le fond de la face intérieure de la jante (6).

6. Enjoliveur selon la revendication 1, caractérisé en ce que l'aimant précité (3) est monté à l'extrémité libre de chaque patte (2) ou au voisinage de cette extrémité libre.
